# EUROPEAN PATENT SPECIFICATION

(11) **EP 3 428 005 B1**
(45) Date of publication and mention of the grant of the patent: **06.01.2021**
(21) Application number: 17763409.4
(22) Date of filing: 09.03.2017
(51) Int. Cl.: B60N 2/02, A47C 1/02, A47C 1/022, A47C 1/035, A47C 1/036, A47C 7/38, A47C 7/50, B60N 2/10, B60N 2/22, B61D 33/00, B63B 29/04, B64D 11/06, A47C 1/037

(54) **SEAT STRUCTURE**
SITZSTRUKTUR
STRUCTURE DE SIÈGE

(30) Priority: 10.03.2016 JP 2016047613
(43) Date of publication of application: 16.01.2019
(73) Proprietor: Delta Kogyo Co., Ltd., Aki-gun, Hiroshima 735-8501 (JP)
(72) Inventor: FUJITA, Etsunori, Aki-gun, Hiroshima 735-8501 (JP); ASANO, Akihito, Aki-gun, Hiroshima 735-8501 (JP); HATTORI, Yuji, Aki-gun, Hiroshima 735-8501 (JP); TAKENAKA, Kazuhiro, Aki-gun, Hiroshima 735-8501 (JP)
(74) Representative: Hoffmann Eitle
(86) International application number: PCT/JP2017/009608
(87) International publication number: WO 2017/155069

(56) References cited:
- JP-A- 2002 302 099
- JP-A- 2007 176 476
- JP-A- 2010 187 821
- US-A- 3 140 117
- US-A- 4 718 716
- US-A- 5 108 148

## Description

### TECHNICAL FIELD

The present invention relates to a seat structure and, in particular, to a seat structure suitably used in vehicles, including automobiles such as buses, aircrafts, trains, and ships.

### BACKGROUND ART

The present applicant proposes, as JP 2857036 A, a chair that includes a seat portion, a backrest, a headrest, and a leg rest (in this specification, the term "leg rest" includes those called ottoman, footrest, and the like, a type that supports only the lower legs, and a type that supports both the lower legs and the feet), in which the seat portion, backrest, and leg rest move in an interlocked manner, and that has posture change functions such as a sitting posture, a napping posture, and a resting posture and can be used as an automobile seat, an office seat, or the like other than a furniture chair.

As examples of known seat structures for aircrafts, US 6, 698, 836 A and US 6, 494, 536 A disclose structures that include a seat portion, a backrest, and a headrest, as well as a leg rest, can be reclined until becoming full-flat, and allow a seated person to take a rest in a state close to a bed.

A further seat structure is disclosed in US 3, 140, 117 A forming the basis for the preamble of claim 1. Similar prior art is US 5,108,148 A.

### SUMMARY OF THE INVENTION

### Technical Problem

The chair disclosed in JP 2857036 A causes the seat portion, backrest, headrest, and leg rest to move in an interlocked manner and is suitable for the seated person to take a rest or nap. However, reclining it to almost a fully flat state requires a fair-sized space. In particular, if this chair is used as a rear seat, which has a narrow foot space, it must be reclined after moving the entire rear seat backward. For example, if this chair is used in automobiles, its use tends to be limited to those having a large interior space, such as relatively large van vehicles. For this reason, there is a demand for seats that are able to adapt themselves to various posture changes, such as a sitting posture, a resting posture, and a napping posture, even in a limited installation space.

The same applies to seats for aircrafts, such as US 6, 698, 836 A and US 6,494,536 A. That is, those seats that enable a seat portion, a backrest, a headrest, a leg rest, and the like, to move to almost a fully flat state can be applied to only seats that are allowed to occupy a large space in an aircraft, such as first-class seats and business-class seats. However, if the space occupied by such an upper-class seat can be narrowed without greatly reducing comfort, the total number of seats installable in the aircraft can be increased. There is also a demand for seats that allow a seated person to take a more relaxed posture in the limited space of an ordinary seat such as an economy-class seat, which has a narrow foot space or leg space.

The present invention has been made in view of the foregoing, and an object thereof is to provide a seat structure that is able to adapt itself to changes in the posture of a seated person in its limited installation space in a vehicle, such as an automobile such as a bus, a train, or an aircraft, and to give more sitting comfort and less fatigue, and can be used not only in vehicles but also in various applications.

### Solution to Problem

To solve the above problems, a seat structure of the present invention is a seat structure including the features of claim 1. Embodiments are defined in the dependent claims.

The seat structure preferably further includes a leg rest disposed so as to be able to protrude forward from under the seat portion. In the relaxing position, the seated person is preferably supported by the leg rest protruding forward, the seat portion in the changeable support form, and the backrest in the normal support form.

The leg rest is preferably disposed such that the leg rest is displaced so as to follow movement of lower legs of the seated person.

When the seated person imposes a load on an ischial tuberosity support portion or its vicinity of the seat portion in the relaxing position, the seat portion rotates around a portion ahead of the ischial tuberosity support portion, is displaced such that a rear edge of the seat portion becomes lower than a front edge thereof, and takes the changeable support form which follows movement of the center of gravity of the seated person. When the seated person imposes a load on a portion close to the front edge of the seat portion, in the relaxing position, the seat portion rotates around a portion behind the ischial tuberosity support portion, is displaced such that the front edge become lower than the rear edge, and takes the changeable support form which follows movement of the center of gravity of the seated person.

The relaxing position preferably includes a rest position in which an angle *θ* formed by a line connecting a hip point and a knee center, and a torso line, is a predetermined angle or more and 180° or less, and an intermediate position between the rest position and the upright position. In the intermediate position, the seat portion preferably basically takes a support form in which the rear edge becomes lower than the front edge. In the rest position, the seat portion preferably basically takes a support form in which the front edge becomes lower than the rear edge.

When reclining the backrest, a torso angle is preferably set to up to 70°. In the relaxing position, a portion of the backrest corresponding to an upper area of an upper body of the seated person preferably serves as a support fulcrum.

The seat structure preferably further includes a headrest wherein the headrest has a shape formed by two axes that are perpendicular to each other in a side view and consist of a long axis and a short axis; the headrest is rotatably supported by a mounting portion around the backrest; in the upright position, one end thereof along a direction of the long axis serves as a head support; and in the relaxing position, the headrest is pressed by a head and thus rotated and one end thereof along a direction of the short axis serves as a head support.

The mounting portion around the backrest is preferably a frame independent of a body of a vehicle or the backrest. A rotation axis coupled to the frame independent of the body or the backrest preferably supports another end along a direction of the long axis.

In the upright position, the angle *θ* formed by the line connecting the hip point and the knee center, and the torso line is preferably 120° or less. In the rest position, the angle *θ* is preferably 140 to 180°. In the intermediate position, the angle *θ* is preferably 110 to 150°.

### Advantageous Effects of the Invention

The positions or inclination angles of the seat portion and backrest of the seat structure of the present invention, that is, the postures of the seat portion and backrest themselves supporting the seated person (hereafter referred to as "support forms") vary according to whether the seat structure is in the upright position or in the relaxing position. Specifically, in the upright position, in which the torso angle is the predetermined angle or less, the seat portion and backrest support the seated person in the normal support form in which the postures of the seat portion and backrest themselves are constant. On the other hand, in the relaxing position, in which the backrest is reclined and the torso angle is the predetermined angle or more, the backrest stably supports the upper body of the seated person in the normal support form in which the posture of the backrest itself is fixed, while the seat portion is in the form in which the posture of the seat portion itself is not constant but changeable (changeable support form) . For this reason, when the seated person moves (changes the posture) and thus his or her center of gravity moves, the posture of the seat portion itself (the support form of the seat portion) is changed. For example, when the seated person takes a posture in which his or her center of gravity is in the ischial tuberosity or vicinity, the rear edge of the seat portion is displaced so as to become lower than the front edge; when the seated person imposes the load on any areas from the thighs to the knees or vicinity and takes a posture in which his or her center of gravity moves forward, the front edge is displaced so as to become lower than the rear edge. Also, in the relaxing position, the backrest supports upper body areas (in particular, the scapulae or vicinity.) which are further from ischial tuberosity or vicinity of the seated person, and the leg rest preferably supports the lower legs.

Thus, when the seated person takes a posture in which the front edge is displaced downward, the angle *θ* formed by the line connecting the hip point and the knee center, and the torso line comes closer to 180°, and the seated person can easily take a supine posture (sleeping posture) suitable for a nap or the like. On the other hand, when the seated person takes a posture in which the rear edge is displaced downward, the angle *θ* is slightly narrowed, and the seat structure can take a posture suitable to do reading, video viewing, or the like while being relaxed. Note that in the upright position, both the seat portion and backrest take the normal support form. Accordingly, the seated person can easily take a sitting posture which is stable and suitable for light work, eating, or the like.

In both the upright position and the relaxing position (including the intermediate position and rest position), the seat structure according to the present invention is able to support the seated person so as to follow various changes in the posture of the seated person and to give comfort and less fatigue to the seated person. Further, in the rest position in which the angle *θ* formed by the line connecting the hip point and the knee center, and the torso line is closer to 180°, of the relaxing positions, the front edge of the seat portion is displaced downward and therefore the seated person can take a posture close to a supine posture even if the backrest is not reclined to the horizontal. Thus, by disposing the seat structure such that the space under the front seat is used as a space in which the legs of the person seated on the rear seat can be put, the distance between the front seat and rear seat can be narrowed compared to that when a conventional seat structure is used. For this reason, the seat structure according to the present invention is preferably used as the passenger seats of buses or the rear seats of ordinary automobiles and is also suitably used as the passenger seats of trains, aircrafts, and the like.

### BRIEF DESCRIPTION OF DRAWINGS

FIGS. 1(a) to 1(c) are perspective views showing the appearance of a seat structure according to one embodiment of the present invention, FIG. 1(a) being a perspective view showing an upright position, FIG. 1(b) being a perspective view showing an intermediate position of relaxing positions, and FIG.1 (c) being a perspective view showing a rest position of the relaxing positions.
FIG. 2(a) is a side view showing a schematic configuration of the seat structure according to the above embodiment in the upright position, FIG. 2(b) is a side view showing a schematic configuration of the seat structure according to the above embodiment in the intermediate position of the relaxing positions, and FIG. 2(c) is a side view showing a schematic configuration of the seat structure according to the above embodiment in the rest position of the relaxing positions.
FIG. 3 is a schematic drawing showing the positions of the seat structure and the postures of a seated person supported by the seat structure.
FIG. 4 is a drawing showing one example of an aspect in which the space between the front seat and rear seat is narrowed.
FIGS. 5(a) to 5(c) are drawings showing one example of a movement mechanism of a leg rest.
FIGS. 6(a) to 6(c) are drawings showing one example of a movement mechanism of a leg rest.
FIGS. 7(a) to 7(c) are drawings showing one example of a movement mechanism in which a leg rest, a backrest, and a headrest are interlocked with each other.
FIGS. 8(a) to 8(c) are drawings showing one example of a movement mechanism in which a leg rest, a backrest, and a headrest are interlocked with each other.

### DESCRIPTION OF EMBODIMENTS

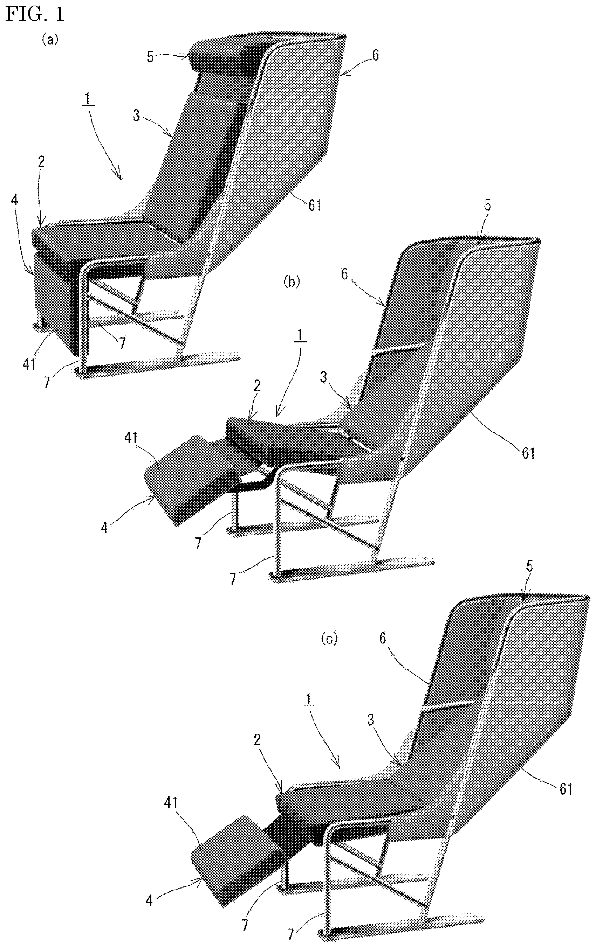

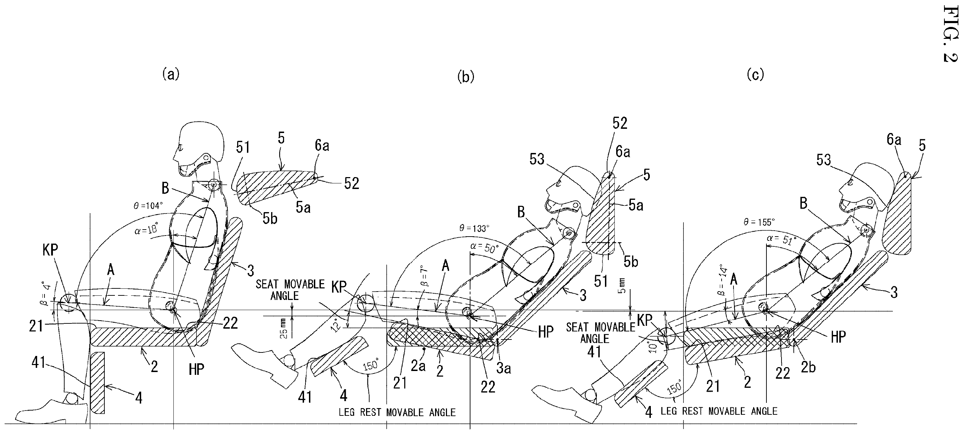

Now, the present invention will be described in more detail on the basis of an embodiment shown in the drawings. As shown in FIGS. 1 and 2, a seat structure 1 of the present embodiment includes a seat portion 2, a backrest 3, a leg rest 4, a headrest 5, and the like. A seat partitioning frame 6 is disposed independently of the backrest 3 so as to surround the left, right, and back sides of the backrest 3. The seat structure 1 is used as a high-grade seat of a bus or the like.

The seat portion 2 is supported by a pair of legs 7, 7 protruding forward from the left and right sides of the seat partitioning frame 6, at a predetermined height from the installation surface. The seat portion 2 is supported so as to be rotatable around a first seat portion rotation fulcrum 2a set ahead of the center thereof in the front-rear direction [see FIG. 2(b)]. The seat portion 2 is also disposed so as to be rotatable around a second seat portion rotation fulcrum 2b disposed between and behind the legs 7, 7 [see FIG. 2(c)]. Accordingly, when the seat portion 2 rotates around the first seat portion rotation fulcrum 2a, a rear edge 22 is displaced so as to become lower than a front edge 21 [see FIGS. 1(b) and 2(b)]; when it rotates around the second seat portion rotation fulcrum 2b, the front edge 21 is displaced so as to become lower than the rear edge 22 [see FIGS. 1(c) and 2(c)].

The backrest 3 is disposed so as to be reclinable back and forth around a backrest rotation fulcrum 3a disposed on a lower portion of the backrest 3 and behind the legs 7, 7 [see FIG. 2(b)]. The reclining angle is set to preferably up to 70°, more preferably 0 to 60° at the torso angle. Accordingly, in the present embodiment, a back plate 61 of the seat partitioning frame 6 surrounding the back of the backrest 3 is disposed on at an angle of up to about 70° backward from a normal so that the maximum reclining angle of the backrest 3 is allowed. Thus, as shown in FIGS. 1(a) to 1(c), the back plate 61 is externally shaped such that an upper portion thereof protrudes behind a lower portion thereof, forming a leg space for a person seated on the rear seat under the back plate 61.

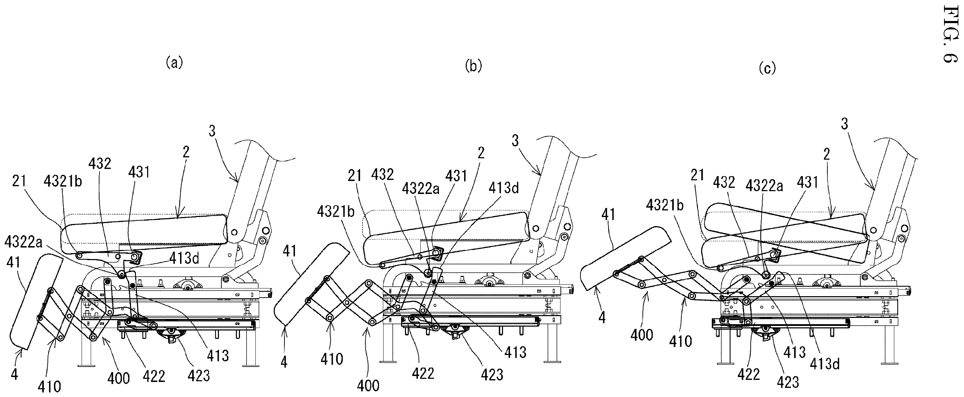

The leg rest 4 is attached to the seat portion 2. Specifically, as shown in FIGS. 1(a) to 1(c), the leg rest 4 has a lower leg support surface 41 having, for example, an approximately rectangular shape. In an upright position [a state shown in FIGS. 1(a) and 2(a)] (to be discussed later), the leg rest 4 is retracted under the front edge 21 of the seat portion 2 with the lower leg support surface 41 oriented forward. In a relaxing position [a state shown in FIGS. 1(b), 1(c), 2(b), and 2(c)], the leg rest 4 is displaced so that it protrudes forward from the retraction position and the lower leg support surface 41 is oriented upward. In the relaxing position, the leg rest 4 may take a form in which it protrudes forward, keeps the inclination angle or vertical position of the lower leg support surface 41 fixed, and supports the lower legs of the seated person without following the movement of the lower legs (such a support form is referred to as a "normal support form" taken by the leg rest 4); alternately, the leg rest 4 may take a changeable support form in which it supports the lower legs while being displaced so as to follow the movement of the lower legs. One method to cause the leg rest 4 to take the changeable support form involves displacing the entire leg rest 4 around a base supporting the leg rest 4 (e.g., the base of a pantograph-shaped link 410 shown in FIG. 6) in a vertical rotation direction when the position of the center of gravity of the lower legs or the load on the leg rest 4 changes with movement of the lower legs. Another method involves displacing the front edge of the lower leg support surface 41 around the rear edge thereof in a vertical rotation direction.

While the leg rest 4 may be configured to move forward independently, it may also be configured to protrude forward in conjunction with reclining movement of the backrest 3. In the former case, the leg rest 4 may be moved by a link mechanism coupled to a motor or the like and intended to extend the leg rest 4. In the latter case, the leg rest 4 may be configured to protrude forward when the back rest 3 is reclined and thus displaced from the upright position to the relaxing position. In the latter case, an interlock mechanism may be any known one. One example is a mechanism disclosed in JP 2857036 A in which when the backrest 3 is inclined backward, a coupling member rotates in the same direction so that a pantograph-shaped link mechanism supported by the coupling member is expanded forward. By causing this link mechanism to support the leg rest 4, the leg rest 4 can be caused to protrude forward in conjunction with reclining movement of the backrest 3. A further specific example of the leg rest 4 will be described later.

FIGS. 2(a) to 2(c) are side views showing the upright position and relaxing position defined in the present invention. In the upright position, the seat portion 2 and backrest 3 are placed in positions shown in FIG. 2(a) and support the seated person such that the torso angle α becomes a predetermined angle or less. The positional relationship between the seat portion 2 and backrest 3 in the upright position is preferably such that an angle *θ* formed by a line A connecting a hip point HP and a knee center KP, and a torso line B is 120° or less. More preferably, the angle *θ* is 90 to 120°. In this case, the torso angle α is preferably 0 to 25°. The hip angle *β* formed by a horizontal plane and the line A is preferably 0 to 10°.

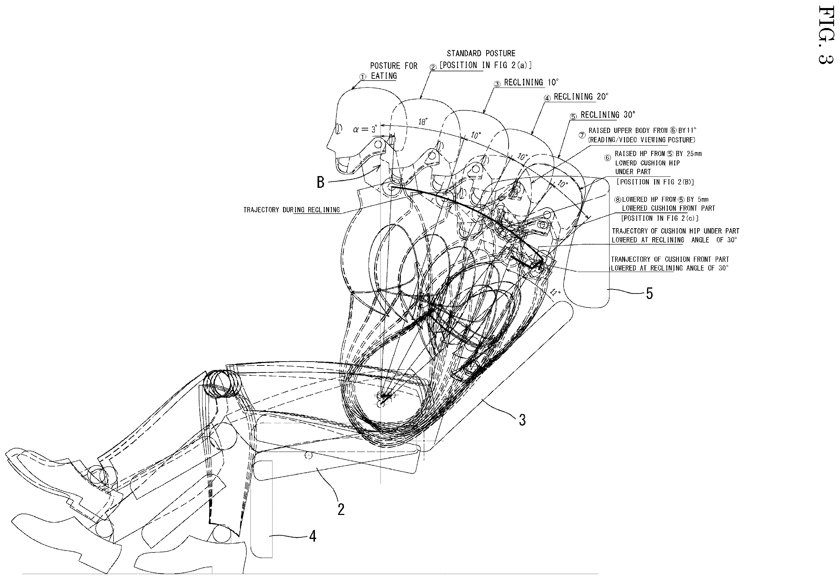

In an example of the upright position shown in FIG. 2(a), the angle *θ* formed by the line A and torso line B is 104°, the torso angle *α* is 18°, and the hip angle *β* is 4°. In this upright position, the seat portion 2 and backrest 3 support the seated person in the normal support form in positions satisfying these angle conditions. That is, the seat portion 2 and backrest 3 support the seated person in the normal support form in which the postures of the seat portion 2 and backrest 3 themselves are kept fixed without the positions of the seat portion 2 and backrest 3 themselves moving vertically or without the supporting angles thereof being changed. Note that although the postures of the seat portion 2 and backrest 3 themselves are kept fixed, loads are imposed on cushion materials used in the seat portion 2 and backrest 3 or the position of the center of gravity is changed with the above angle conditions satisfied. Thus, the cushion materials are compressed/deformed or sink, or the cushion deformation positions are changed, as a matter of course. This means that the seated person can do light work or eat food stably in the upright position. Note that when a person eats food on a bus, train, aircraft, or the like, he or she typically takes a posture in which the torso angle *α* is about 3°, and his or her shoulders, scapulae, or vicinity tends to slightly depart from the backrest 3, as shown in FIG. 3. However, he or she is less likely to cause a hip slide or the like and can easily stably keep such a posture, since the seat portion 2 and backrest 3 are in the normal support form in the upright position.

FIGS. 2(b) and 2(c) show states in which the backrest 3 is in a relaxing position. FIG. 2(c) shows a rest position of the relaxing positions, and the seated person is taking a posture closest to a supine posture in this position. FIG. 2(b) shows an intermediate position of the relaxing positions, and this position is closer to the upright position than the rest position.

In the rest position shown in FIG. 2(c), the angle *θ* formed by the line A connecting the hip point HP and knee center KP, and the torso line B is a predetermined angle or more and 180°or less, preferably 140 to 180°. In this case, the torso angle *α* is preferably 30 to 70°, and the hip angle *β* formed by the horizontal plane and line A is preferably -3 to -30°. By satisfying these conditions, the seated person can take a posture close to a supine posture without hardship even if the torso angle *α* is the maximum angle of 60°. FIG. 2(c) shows an example of angles satisfying these conditions. That is, the angle *θ* formed by the line A and torso line B is 155°, the torso angle *α* is 51°, and the hip angle *β* is -14°.

On the other hand, the intermediate position shown in FIG. 2(b) is an intermediate position between the upright position and rest position. In this position, the angle *θ* formed by the line A connecting the hip point HP and knee center KP, and the torso line B is preferably 110 to 150°. In this case, the torso angle *α* is preferably 30 to 70°, and the hip angle *β* formed by the horizontal plane and line A is preferably 3 to 20°. In the intermediate position satisfying these conditions, the seated person is leaning on the backrest 3 with the hip displaced downward and with the knees located slightly upward. This position allows the seated person to breathe easily and is suitable for the seated person to do reading or the like while being relaxed. FIG. 2(b) shows an example of angles satisfying these conditions. That is, the angle *θ* formed by the line A and torso line B is 133°, the torso angle *α* is 50°, and the hip angle *β* is 7°.

In the relaxing positions shown in FIGS. 2(b) and 2(c), the leg rest 4 protrudes forward and supports the lower legs of the seated person. In the intermediate position shown in FIG. 2(b), the leg rest 4 is preferably set so as to protrude at an angle of 120° or more, preferably 120 to 180° with respect to the horizontally located seat portion 2. Similarly, in the rest position shown in FIG. 2(c), the leg rest 4 is preferably set so as to protrude at an angle of 120° or more, preferably 120 to 180° with respect to the seat portion 2 whose front edge is displaced downward. In both examples shown in FIGS. 2(b) and 2(c), the angle is set to 150°. Thus, the lower leg support surface 41 serves as an inclined surface whose front portion is lowered, and the leg rest 4 can naturally support the lower legs without forcibly applying a force thereto.

Thus, in the relaxing positions shown in FIGS. 2 (b) and 2(c), the load of the upper body part from the vicinity of the scapulae to the shoulders (upper areas of the upper body), located away from the ischial tuberosity, is shared by the backrest 3 and the load of the lower legs is shared by the leg rest 4. Accordingly, the shared loads in the relaxing positions are increased compared to those in the upright position shown in FIG. 2(a), and the loads shared by the seat portion 2 are relatively reduced. For this reason, if the seat portion 2 is disposed such that it can be displaced, it is more likely to follow changes in the posture of the seated person. To this end, in the present embodiment, the seat portion 2 is disposed such that it can change its support form in accordance with movement of the gravity center of the seated person caused by a change in the posture thereof in the relaxing positions shown in FIGS. 2(b) and 2(c). Specifically, when the seated person imposes the load on the ischial tuberosity support portion or its vicinity of the seat portion 2 and thus his or her center of gravity moves backward, the seat portion 2 rotates around the first seat portion rotation fulcrum 2a disposed on the portion ahead of the ischial tuberosity support portion, and the rear edge 22 is displaced so as to become lower than the front edge 21. Thus, the seat portion 2 takes the intermediate position shown in FIG. 2(b). In this position, the knee center KP is slightly higher than the hip point HP and therefore a hip slide does not occur. Also, the torso angle *α* is large and therefore the seated person can breathe easily. Then, if the seated person whose gravity center position is located on the ischial tuberosity support portion or its vicinity slightly changes his or her posture, the seat portion 2 changes its support form in which the rear edge 22 is lower than the front edge 21, so as to follow the change in the posture.

On the other hand, if the seated person imposes the load on a portion close to the front edge 21 of the seat portion 2, the position of the center of gravity moves ahead of that in FIG. 2(b). In this case, the seat portion 2 is displaced around the second seat portion rotation fulcrum 2b, that is, with the rear edge 22 held at approximately the same height so that the front edge 21 becomes lower than the rear edge 22. Thus, the seat portion 2 takes the rest position shown in FIG.2 (c). Then, if the seated person slightly changes his or her posture at the rest position, the seat portion 2 changes its support form in which the front edge 21 is lower than the rear edge 22, so as to follow the change in the posture. In the rest position, the body of the seated person is taking a posture close to a supine posture, and this posture is suitable for a nap or the like. However, the angle is set as described above, and the seat structure 1 is not a fully flat state. Also, the space under the back plate 61 of the seat partitioning frame 6 disposed at the predetermined inclination angle serves as a foot space for the person seated on the rear seat. For this reason, a space occupied by a single seat structure 1 in plan view is narrower than that of a full flat-type seat structure.

According to the present embodiment, in the upright position, the seat portion 2 in the normal support form and the backrest 3 in the normal support form stably support the posture of the seated person so that the posture of the seated person is suitable for light work or eating. On the other hand, when the backrest 3 is reclined so that the torso angle becomes a predetermined angle, for example, about 50° and thus is placed in a relaxing position, the seat portion 2 that has been in the normal support form in the upright position takes the changeable support form, that is, a support form in which the posture (support form) of the seat portion 2 itself follows posture changes or the like of the seated person and the inclination angle or the like of the seat surface is changed. Thus, when the seated person changes his or her posture in the relaxing position by imposing the load on the ischial tuberosity support portion or its vicinity or on a portion close to the front edge 21, the seat portion 2 follows the posture change, and the fulcrum (first or second seat portion rotation fulcrum 2a or 2b) used to change the support form is changed. That is, the changeable support form is a form in which the seat portion 2 moves so as to follow movement of the center of gravity caused by the posture change of the seated person. Thus, even if the seated person makes various body movements to relieve sitting fatigue, the seat structure 1 can support the seated person in postures corresponding to the body movements without forcibly applying a force to the seated person. The body of the seated person does not lose its shape in the limited space although the whole body is relaxed. Also, the seated person can easily take a posture close to a supine posture (sleeping posture) in a relaxing position, particularly, in the rest position. Further, in the relaxing positions (intermediate position and rest position), the lower legs and the upper areas of the upper body, which are away from the hip or vicinity of the seated person, are firmly supported by the leg rest 4 and backrest 3, respectively. Thus, a hip slip is less likely to occur, and the body of the seated person is stabilized.

A posture support method according to the present embodiment is a method that, during a transition from the upright position to a relaxing position, allows posture changes to be followed, can easily cause muscular contraction and muscular relaxation, and is effective in promoting blood circulation through the whole body. This posture support method is very useful in relieving the fatigue of the seated person. In a relaxing position, the reclining angle of backrest 3, at the torso angle *α*, is set to up to 70°. That is, even if the seated person takes a posture close to a supine posture in the rest position, the whole body takes not a horizontal posture but an inclined posture in which the position of the head is high and the positions of the lower legs are low.

In a running vehicle such as an automobile, an acceleration is inputted from the vertical direction and/or front-rear direction due to vibration or shock. The seat structure 1 of the present embodiment is configured so that the backrest 3 supports, as a fulcrum, the upper areas of the upper body, which is close to the head, of the seated person taking the above inclined posture in which the position of the head is high and the seat portion 2 supports the hip and legs located on the seat portion side such that the hip and legs can move. Thus, the upper areas of the upper body are firmly pressed against the inclined backrest 3 due to the mass of the head and gravity, and the acceleration input to the head from outside due to vibration or shock can be reduced, suppressing the rotation of the head.

The headrest 5 will be described below. The headrest 5 is not supported by the backrest 3, but is rotatably supported by any mounting part around the backrest 3. In the present embodiment, the seat structure 1 includes the seat partitioning frame 6, and a rotation axis 6a is disposed on the seat partitioning frame 6. The headrest 5 is in the shape of an approximate ellipse in a side view, and the approximate ellipse contains two axes that are perpendicular to each other and consist of a long axis 5a and a short axis 5b. In the upright position, as shown in FIGS. 1(a) and 2(a), one end 51 along the long axis 5a, of the head rest 5 is located in front and serves as a head support (which may also support the neck), and the rotation axis 6a is supported by the other end 52 thereof along the long axis 5a. In the upright position, as shown in FIG. 1(a), while the backrest 3 is spaced from the back plate 61 of the seat partitioning frame 6, the one end 51 along the long axis 5a is oriented forward and the headrest 5 protrudes forward from the back plate 61 of the seat partitioning frame 6 in a large amount. Therefore, the areas from the head to the neck of the seated person can be reliably supported.

On the other hand, when the backrest 3 is reclined in the relaxing position, the one end 51 along the long axis 5a is pressed diagonally downward by the head. Thus, the one end 51 of the headrest 5 is rotated downward around the rotation axis 6a, and one end 53 along the short axis 5b is located in front [see FIGS. 1(b), 1(c), 2(b), and 2(c)]. As seen above, the headrest 5 rotates so as to adapt itself to the backward movement of the head of the seated person. Accordingly, the head rest 5 is able to reliably support the head in both the upright position and the relaxing position. By employing such a configuration in which the backrest 3 does not directly support the headrest 5, it is possible to support the head rest 5 using a simple configuration so as to follow a change in the posture. Since the headrest 5 follows the head, the head is stably supported, and the backrest 3 supports the upper areas of the upper body as a fulcrum as described above. Thus, the effect of reducing the acceleration input to the head can be increased. Note that if the seat structure 1 does not include the seat partitioning frame 6, a body around the rear seat of the vehicle, or the like may be used as the mounting part that supports the rotation axis 6a of the headrest 5.

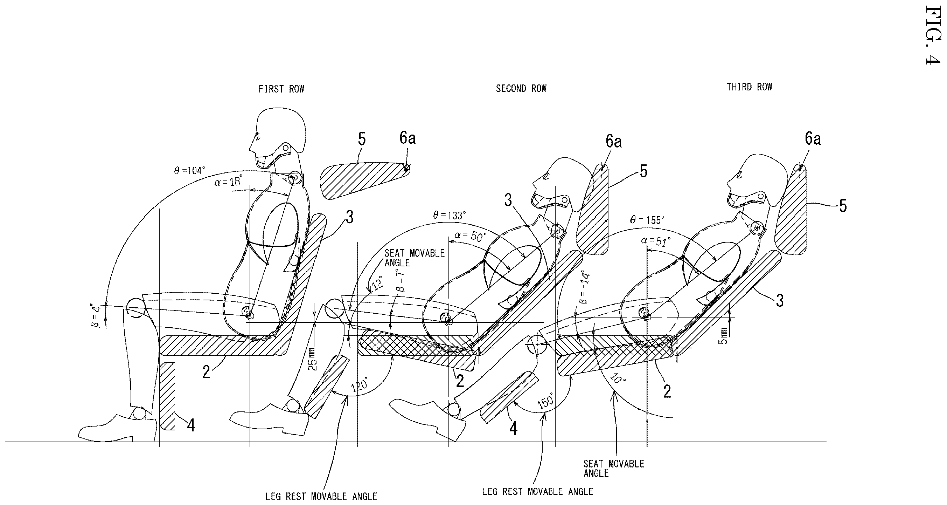

FIG. 4 is a drawing showing the layout when the seat structure 1 does not include the seat partitioning frame 6 and the space between the front seat and rear seat is narrowed. The space between the front seat and rear seat shown in this example is about 2/3 of that shown in FIG. 2. In this example, a seat structure 1 in the first row is placed in the upright position, that in the second row is placed in the intermediate position of the relaxing positions, and that in the third row is placed in the rest position of the relaxing positions.

If the space between the front seat and rear seat is narrowed as shown in this example and the intermediate position is taken as seen in the second row, the knee center KP becomes higher than the hip point HP. Consequently, the knee center KP of a person seated on the rear seat may contact the backrest 3 of the front seat. However, if the angle of the leg rest 4 from the lower surface of the seat portion 2 is reduced, the knee center KP can avoid contacting the backrest 3. That is, if the leg rest 4 is disposed so as to be movable in accordance with the load, the legs can easily avoid contacting the backrest 3 in any posture. Also, if the space between the front seat and rear seat is narrowed as shown in this example and the rest position is taken as seen in the third row, the knees are extended. Accordingly, even if the angle of the leg rest 4 from the lower surface of the seat portion 2 is set to the same angle as that in FIG. 2, the legs do not contact the backrest 3 of the front seat.

In both the seat structures 1 shown in FIGS. 2 and 4, the height of the hip point HP in the upright position and the height of the hip point HP in the rest position of the relaxing positions are the same. Also, in the intermediate position, in which the rear edge 22 of the seat portion 2 is lower than the front edge 21, of the relaxing positions, the amount of downward displacement of the hip point HP is set to, for example, up to 50 mm, preferably about 25 mm so that the height of HP does not become much lower than the heights of HP in the upright position and rest position. Thus, the seat structure 1 of the present embodiment prevents areas from the hip to the waist or vicinity from greatly vertically moving due to reclining movement or a change in the posture. This allows the seated person to keep a stable sitting posture or sleeping posture without receiving discomfort.

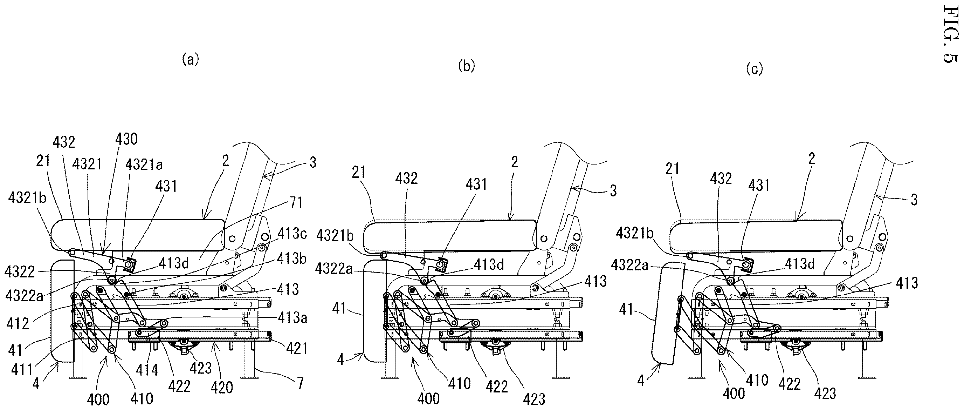

Next, referring to FIGS. 5 (a) to 6(c), an example of a movement mechanism 400 of the leg rest 4 will be described. The movement mechanism 400 includes a pantograph-shaped link 410, a slide mechanism 420, and a seat portion interlock mechanism 430. The pantograph-shaped link 410 is a link obtained by crossing and combining multiple link plates so as to form a pantograph shape. The pantograph-shaped link 410 is configured to contract when the link plates come close to each other and to expand when they depart from each other. The leg rest 4 is coupled to respective ends of two link plates 411, 412 serving as ends of the pantograph-shaped link 410. As shown in FIGS. 5(a) to 5(c), in a state in which the pantograph-shaped link 410 is contracting, the leg rest 4 is retracted under the seat portion 2 with the lower leg support surface 41 oriented forward. On the other hand, as shown in FIGS. 6(a) to (c), as the pantograph-shaped link 410 gradually expands, the leg rest 4 protrudes forward and is displaced in the rotation direction so that the lower leg support surface 41 is oriented upward.

Disposed as the most rear portion of the pantograph-shaped link 410 is an approximately V-shaped link plate 413 whose inside angle is an obtuse angle and whose one side is shorter than the other side. A lower portion 413a of the short side is coupled to one end of a slide member coupling link plate 414. The other end of the slide member coupling link plate 414 is coupled to a movable rail 422 of the slide mechanism 420. The slide mechanism 420 also includes a fixed rail 421 fixed to the legs 7 along the front-rear direction of the seat structure 1. The movable rail 422 is disposed so as to be slidable on the fixed rail 421 in the front-rear direction. The slide mechanism 420 is also provided with a motor 423 serving as a driving source for sliding the movable rail 422. Accordingly, the pantograph-shaped link 410 expands when the movable rail 422 is moved forward by the motor 423; it contracts and is retracted when the movable rail 422 is moved backward by the motor 423.

A mid-portion 413b of the long side of the approximately V-shaped link plate 413 is supported by portions close to the lower edges, of seat portion support frames 71 fixed to the legs 7 under the seat portion 2. An upper portion 413c of the long side of the approximately V-shaped link plate 413 has an approximately flat upper end surface 413d. In a state in which the pantograph-shaped link 410 is retracted, the approximately V-shaped link plate 413 is disposed such that the long side is inclined diagonally forward.

As with the pair of legs 7 disposed at a predetermined distance in the width direction, the seat portion support frames 71 under the seat portion 2 are disposed at a predetermined distance in the width direction. A torsion bar 431 of the seat portion interlock mechanism 430 extends over portions close to the upper edges of the pair of the seat portion support frames 71.

In addition to the torsion bar 431, the seat portion interlock mechanism 430 includes an approximately T-shaped movable plate 432 having a lateral side 4321 extending in the front-rear direction and a longitudinal side 4322 extending vertically. A lateral side rear end 4321a of the movable plate 432 is supported by the torsion bar 431, and a lateral side front end 4321b thereof is coupled to a lower portion of the front edge 21 of the seat portion 2. A longitudinal side lower end 4322a of the longitudinal side 4322 is disposed so as to contact the upper end surface 413d of the approximately V-shaped link plate 413. Note that the lateral side front end 4321b of the movable plate 432 has a thickness such that there is slight play between the leg rest 4 and the front edge 21 of the seat portion 2 in a state in which the leg rest 4 is retracted as shown in FIG. 5(a). The longitudinal side lower end 4322a is preferably provided with a roller member or the like so as to smoothly move when contacting the upper end surface 413d.

According to the present embodiment, before the person is seated on the seat portion 2, the lateral side front end 4321b of the movable plate 432 energizes the front edge 21 of the seat portion 2 upward using the elasticity of the torsion bar 431, as shown in FIG. 5(a). When the person is seated in this state, the front edge 21 attempts to displace itself downward, as shown in FIG. 5(b). However, the longitudinal side lower end 4322a of the movable plate 432 is in contact with the upper end surface 413d of the approximately V-shaped link plate 413. Also, the long side of the approximately V-shaped link plate 413 is inclined diagonally forward with the pantograph-shaped link 410 retracted. For this reason, even when the person is seated and the front edge 21 attempts to displace itself downward, the longitudinal side lower end 4322a of the movable plate 432 is pressed against the upper end surface 413d of the approximately V-shaped link plate 413. Thus, the seat portion 2 can no longer displace itself downward, that is, it is locked so that the downward displacement thereof is regulated. However, there is slight play between the lateral side front end 4321b of the movable plate 432 and the leg rest 4. Thus, the seat portion 2 can be slightly distorted downward until contacting an upper portion of the retracted leg rest 4. Even during the slight distortion, the elasticity of the torsion bar 431 works, and a stroke feeling, vibration absorption characteristics or the like at the time of sitting is obtained. Note that the term "normal support form" also includes a case in which the seat portion 2 is slightly distorted due to such slight play under the seat portion 2.

When the motor 423 is driven to cause the retracted leg rest 4 to protrude forward, the movable rail 422 starts to move forward. However, the longitudinal side lower end 4322a of the movable plate 432 is pressed against the upper end surface 413d of the approximately V-shaped link plate 413, as shown in FIG. 5(c). Accordingly, even if the center of gravity is moved, the front edge 21 of the seat portion 2 can no longer be displaced downward.

When the movable rail 422 further moves forward, the pantograph-shaped link 410 expands, and the leg rest 4 is displaced in the rotation direction so that the lower leg support surface 41 oriented forward is gradually oriented diagonally upward, as shown in FIGS. 6(a) to 6(c). Thus, the lower legs of the seated person are supported by the leg rest 4.

As shown in FIG. 6(a), when the position of the leg rest 4 reaches a position ahead of the front edge 21 of the seat portion 2, the diagonally forward inclined long side of the approximately V-shaped link plate 413 becomes approximately linear, and the longitudinal side lower end 4322a of the movable plate 432 moves ahead of the upper end surface 413d of the approximately V-shaped link plate 413. Thus, the locked seat portion 2 is released, and the front edge 21 of the seat portion 2 is allowed to be displaced downward due to movement of the center of gravity of the seated person. In FIGS. 6(b) and 6(c), the long side of the approximately V-shaped link plate 413 is inclined backward. Thus, the approximately V-shaped link plate 413 no longer interferes with the longitudinal side lower end 4322a of the movable plate 432, and the front edge 21 of the seat portion 2 is allowed to be displaced downward at full stroke. As shown in FIG. 6(c), when the seated person imposes the load on the ischial tuberosity support portion or its vicinity of the seat portion 2 and the center of gravity moves further backward, the seat portion 2 rotates around the first seat portion rotation fulcrum 2a disposed on the portion ahead of the ischial tuberosity support portion [see FIG. 2(b)], and the rear edge 22 is displaced so as to become lower than the front edge 21 and is placed in the intermediate position.

Even if the seat portion 2 is displaced as shown in FIGS. 6(a) to 6(c), predetermined vibration absorption characteristics or the like work due to the elasticity of the torsion bar 431.

When retracting the leg rest 4, the motor 423 is driven to move the movable rail 422 backward. Thus, the pantograph-shaped link 410 contracts, and the leg rest 4 sequentially makes transitions from a state shown in FIG. 6(c) to those shown in FIGS. 6(b), 6(a), 5(c), 5(b), and 5(a), that is, makes movements opposite to those described above and then is retracted. When, during these transitions, it reaches to the state in FIG. 5(c) and the long side of the approximately V-shaped link plate 413 is inclined diagonally forward, the upper end surface 413d thereof presses the longitudinal side lower end 4322a of the movable plate 432. As a result, the front edge 21 of the seat portion 2 is locked again such that it cannot be displaced downward. Thus, in the process of retracting the leg rest 4 under the front edge 21 of the seat portion 2, the contact of the leg rest 4 with the seat portion 2 and thus the prevention of retraction of the leg rest 4 are avoided.

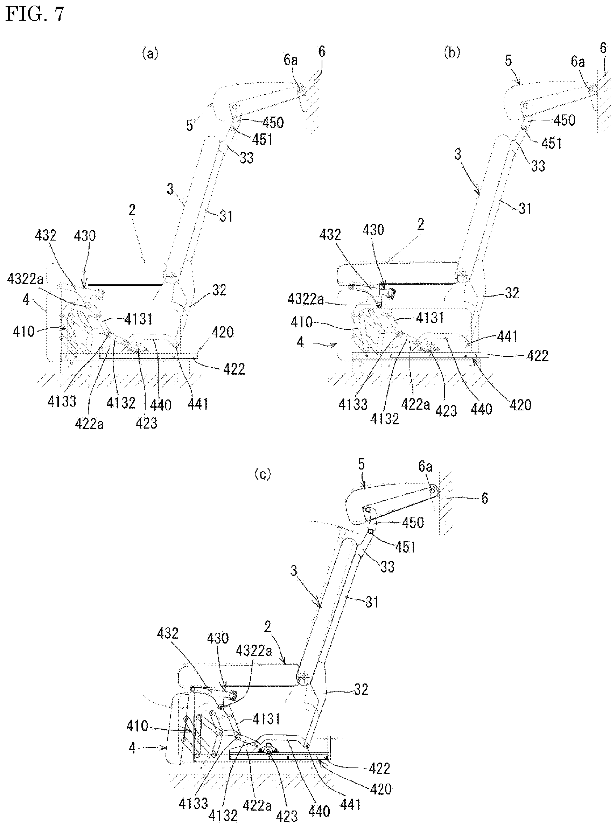

In an example shown in FIGS. 5(a) to 6(c), the movement of the leg rest 4 is not interlocked with that of the backrest 3. However, an interlock mechanism to transmit the driving force of the motor 423 to the backrest 3 may be provided, and the reclining movement of the backrest 3 and the movement of the leg rest 4 may be interlocked, as a matter of course. FIGS. 7(a) to 8(c) show this example.

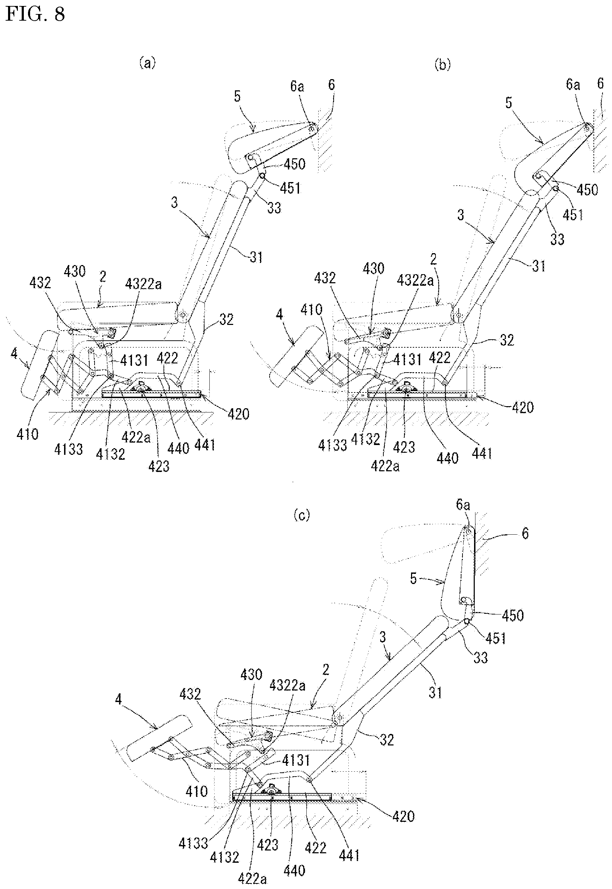

As in FIGS. 5 and 6, an interlock mechanism 400A shown in FIGS. 7(a) to 8(c) includes a pantograph-shaped link 410, a slide mechanism 420, and a seat portion interlock mechanism 430. The interlock mechanism 400A further includes a backrest interlock link 440 and a headrest interlock link 450. The configurations of the pantograph-shaped link 410, slide mechanism 420, and seat portion interlock mechanism 430 are substantially the same as those shown in FIGS. 5(a) to 6(c) and therefore will not be described in detail. In FIGS. 5(a) to 6(c), the approximately V-shaped link plate 413 having the short side on the slide mechanism 420 side and the long side on the seat portion 2 side is disposed as the most rear portion of the pantograph-shaped link 410. On the other hand, in FIGS. 7(a) to 8(c), a seat portion-side link plate 4131 serving as a long side and a slide mechanism-side link plate 4132 serving as a short side are separately disposed, and both are coupled together by a pivot shaft 4133. The upper end surface of the seat portion-side link plate 4131 serves as a cam and contacts a roller member disposed on a longitudinal side lower end 4322a of a movable plate 432. On the other hand, the slide mechanism-side link plate 4132 is supported by a mounting plate 422a of a movable rail 422 of the slide mechanism 420.

A backrest 3 includes a rear surface cover member 31 that covers the rear surface of the backrest 3. The rear surface cover member 31 is provided with a lower mounting plate 32 that protrudes downward from the rear surface cover member 31 and extend toward the slide mechanism 420 and an upper mounting plate 33 that protrudes upward from the rear surface cover member 31 and extends toward a headrest 5. A rear portion of the backrest interlock link 440 is coupled to the lower end of the lower mounting plate 32 through a pivot shaft 441. A front portion of the backrest interlock link 440 is supported by the mounting plate 422a of the movable rail 422. A lower portion of the headrest interlock link 450 is coupled to the upper end of the upper mounting plate 33 through a pivot shaft 451. An upper portion of the headrest interlock link 450 is supported by a lower portion or vicinity of the headrest 5. As described above, an upper portion of the headrest 5 is supported by a rotation axis 6a supported by a seat partitioning frame 6 or the like.

According to an aspect shown in FIGS. 7(a) to 8(c), when the motor 423 of the slide mechanism 420 is driven in the state in FIG. 7(a) or 7(b), the movable rail 422 starts to move forward. Then, through a state in FIG. 7(c), the longitudinal side lower end 4322a of the movable plate 432 moves ahead of the upper end surface of the seat portion-side link plate 4131, as shown in FIGS. 8(a) to 8(c). Thus, as in the aspect shown in FIGS. 5(a) to 6(c), the leg rest 4 moves forward, and the seat portion 2 takes the changeable support form according to changes in the posture of the person.

On the other hand, when the movable rail 422 of the slide mechanism 420 moves forward, the backrest interlock link 440 moves forward as well. Thus, the position of the shaft pin 441 coupling the backrest interlock link 440 and lower mounting plate 32 moves forward. Since the shaft pin 441 is located on the lower end of the lower mounting plate 32, the forward movement of the position of the shaft pin 441 tilts the upper end of the lower mounting plate 32 backward. The lower mounting plate 32 is formed integrally with the rear surface cover member 31 of the backrest 3. Accordingly, when the lower end of the lower mounting plate 32 is displaced forward, the backrest 3 is reclined backward, as shown in FIGS. 7(c) and 8(a) to 8(c).

Thus, the upper mounting plate 33 disposed integrally with the rear surface cover member 31 on an upper portion of the backrest 3 or its vicinity is inclined backward as well. Thus, the headrest interlock link 450 coupled to the upper mounting plate 33 through the shaft pin 451 is displaced backward while rotating around the shaft pin 451. At this time, the headrest 5 rotates around the rotation axis 6a. The lower end thereof is displaced from a position spaced from the seat partitioning frame 6 in FIGS. 7 (a) and 7 (b) to a position close to the seat partitioning frame 6 as shown in FIGS. 7(c) and 8(a) to 8(c), that is, from the upright position to the relaxing position. Thus, the posture of the headrest 5 itself is changed.

When the movable rail 422 of the slide mechanism 420 is moved backward from the position in FIG. 8(c) to the position in FIG. 7(a) by the motor 423, the seat portion 2, backrest 3, leg rest 4, and headrest 5 make movements opposite to those described above.

According to the aspect in FIGS. 7(a) to 8(c), use of only the motor 423 of the slide mechanism 420 allows for change of the seat portion 2 from the normal support form to the changeable support form, movement of the leg rest 4, reclining of the backrest 3, and a change in the posture of the headrest 5.

### Industrial Applicability

The seat structure of the present invention is able to easily take postures corresponding to the positions from the upright position to the rest position in the limited space. Thus, the seat structure of the present invention is suitably used as the passenger seats of buses or the rear seats of ordinary automobiles, where the space between the front seat and rear seat is particularly limited in most cases, as well as for the passenger seats of trains, aircrafts, and the like that have a plurality of seat rows. Further, the seat structure of the present invention can be used not only as the seats of these vehicles but also as the seats of movie theaters, theaters, sports stadiums, and the like. Description of Reference Signs

- 1: seat structure
- 2: seat portion
- 21: front edge
- 22: rear edge
- 2a: first seat portion rotation fulcrum
- 2b: second seat portion rotation fulcrum
- 3: backrest
- 4: leg rest
- 5: headrest
- 6: seat partitioning frame
- 400, 400A: movement mechanism

## Claims

1. A seat structure (1) comprising:
a seat portion (2); and
a backrest (3) configured to be reclinable with respect to the seat portion (2), wherein
in an upright position the postures of the seat portion (2) and the backrest (3) are constant, and
in a relaxing position in which the backrest (3) is reclined, the posture of the backrest (3) is constant and the posture of the seat portion (2) is changeable wherein the seat portion (2) follows movement of the center of gravity of the seated person so that the posture of the seat portion (2) is changed wherein
when the seated person imposes a load on an ischial tuberosity support portion or vicinity of the seat portion (2), in the relaxing position, the seat portion (2) rotates around a portion (2a) ahead of the ischial tuberosity support portion, and is displaced such that a rear edge (22) of the seat portion (2) becomes lower than a front edge (21)thereof, **characterized in that**
when the seated person imposes a load on a portion close to the front edge (21) of the seat portion (2) in the relaxing position, the seat portion (2) rotates around a portion (2b) behind the ischial tuberosity support portion, and is displaced such that the front edge (21) become lower than the rear edge (23) .

2. The seat structure of Claim 1, further comprising a leg rest (4) disposed so as to be able to protrude forward from under the seat portion (2), wherein
in the relaxing position, the leg rest (4) protrudes forward.

3. The seat structure of Claim 2, wherein the leg rest (4) is disposed such that the leg rest (4) is displaced so as to follow movement of lower legs of the seated person.

4. The seat structure of any one of Claims 1 to 3, further comprising a headrest (5) wherein the headrest (5) has a shape formed by two axes (5a, b) that are perpendicular to each other in a side view and consist of a long axis (5a) and a short axis 5b); the headrest (5) is rotatably supported by a mounting portion around the backrest (3); wherein, in the upright position, one end (51) thereof along a direction of the long axis (5a) serves as a head support; and in the relaxing position, the headrest (5) is pressable by a head and thus rotatable and one end (53) thereof along a direction of the short axis (5b) serves as a head support.

5. The seat structure of Claim 4, wherein
the mounting portion around the backrest (3) is a frame (6) independent of a body of a vehicle or the backrest (3), and
a rotation axis (6a) coupled to the frame (6) independent of the body or the backrest (3) supports the other end (52) along the direction of the long axis (5a).

6. The seat structure of any one of Claims 1 to 5, wherein the seat portion (2) is supported by a pair of legs (7) protruding forward from the left and right sides of the seat partitioning frame (6), at a predetermined height from the installation surface and so as to be rotatable around a first seat portion rotation fulcrum (2a) set ahead of the center thereof in a front-rear direction and so as to be rotatable around a second seat portion rotation fulcrum (2b) disposed between and behind the legs (7) so that, when the seat portion (2) rotates around the first seat portion rotation fulcrum (2a), the rear edge (22) is displaced so as to become lower than the front edge (21) and when the seat portion (2) rotates around the second seat portion rotation fulcrum (2b), the front edge (21) is displaced so as to become lower than the rear edge (22).

## Patentansprüche

1. Sitzstruktur (1), umfassend:
einen Sitzabschnitt (2); und
eine Rückenlehne (3), welche konfiguriert ist, in Bezug auf den Sitzabschnitt (2) neigbar zu sein, wobei
in einer aufrechten Position die Stellungen des Sitzabschnitts (2) und der Rückenlehne (3) konstant sind, und
in einer Entspannungsposition, in welcher die Rückenlehne (3) geneigt ist, die Stellung der Rückenlehne (3) konstant ist und die Stellung des Sitzabschnitts (2) veränderlich ist, wobei der Sitzabschnitt (2) einer Bewegung des Schwerpunkts der sitzenden Person folgt, sodass die Stellung des Sitzabschnitts (2) geändert wird, wobei
wenn die sitzende Person einem Stützabschnitt für die Sitzbeinhöcker oder einer nahen Umgebung des Sitzabschnitts (2) in der Entspannungsposition eine Belastung auferlegt, der Sitzabschnitt (2) rund um einen Abschnitt (2a) vor dem Stützabschnitt für die Sitzbeinhöcker rotiert und versetzt wird, sodass ein hinterer Rand (22) des Sitzabschnitts (2) niedriger wird als ein vorderer Rand (21) davon, **dadurch gekennzeichnet, dass**
wenn die sitzende Person einem Abschnitt nahe des vorderen Randes (21) des Sitzabschnitts (2) in der Entspannungsposition eine Belastung auferlegt, der Sitzabschnitt (2) rund um einen Abschnitt (2b) hinter dem Stützabschnitt für die Sitzbeinhöcker rotiert und versetzt wird, sodass der vordere Rand (21) niedriger wird als der hintere Rand (23).

2. Sitzstruktur nach Anspruch 1, weiter eine Beinlehne (4) umfassend, welche so ausgelegt ist, dass sie in der Lage ist, unter dem Sitzabschnitt (2) nach vorn vorzustehen, wobei
in der Entspannungsposition die Beinlehne (4) nach vorn vorsteht.

3. Sitzstruktur nach Anspruch 2, wobei die Beinlehne (4) ausgelegt ist, sodass die Beinlehne (4) versetzt wird, um einer Bewegung der Unterschenkel der sitzenden Person zu folgen.

4. Sitzstruktur nach einem der Ansprüche 1 bis 3, weiter eine Kopflehne (5) umfassend, wobei die Kopflehne (5) eine Form aufweist, welche durch zwei Achsen (5a, b) gebildet wird, welche in einer Seitenansicht rechtwinkelig zueinander sind und aus einer langen Achse (5a) und einer kurzen Achse (5b) bestehen; die Kopflehne (5) durch einen Montageabschnitt rund um die Rückenlehne (3) drehbar gestützt wird; wobei in der aufrechten Position ein Ende (51) davon entlang einer Richtung der langen Achse (5a) als eine Kopfstütze dient; und in der Entspannungsposition die Kopflehne (5) durch einen Kopf komprimierbar und somit drehbar ist und ein Ende (53) davon entlang einer Richtung der kurzen Achse (5b) als eine Kopfstütze dient.

5. Sitzstruktur nach Anspruch 4, wobei
der Montagabschnitt rund um die Rückenlehne (3) ein Rahmen (6) ist, welcher unabhängig von einem Körper eines Vehikels oder der Rückenlehne (3) ist; und
eine Rotationsachse (6a), welche unabhängig von dem Körper oder der Rückenlehne (3) an den Rahmen (6) gekoppelt ist, das andere Ende (52) entlang der Richtung der langen Achse (5a) stützt.

6. Sitzstruktur nach einem der Ansprüche 1 bis 5, wobei der Sitzabschnitt (2) durch eine Paar von Beinen (7), welche von der linken und rechten Seite des den Sitz unterteilenden Rahmens (6) nach vorn vorstehen, in einer vorbestimmten Höhe von der Installationsfläche gestützt wird, und um rund um einen Dreh- und Angelpunkt des ersten Sitzabschnitts (2a) drehbar zu sein, welcher vor dem Mittelpunkt davon in einer Richtung von vorn nach hinten festgelegt ist, und um rund um einen Dreh- und Angelpunkteines zweiten Sitzabschnitts (2b) drehbar zu sein, welcher zwischen und hinter den Beinen (7) ausgelegt ist, sodass, wenn der Sitzabschnitt (2) sich rund um den Dreh- und Angelpunkt des ersten Sitzabschnitts (2a) dreht, der hintere Rand (22) versetzt wird, sodass er niedriger wird als der vordere Rand (21), und wenn der Sitzabschnitt (2) sich rund um den Dreh- und Angelpunkt des zweiten Sitzabschnitts (2b) dreht, der vordere Rand (21) versetzt wird, sodass er niedriger wird als der hintere Rand (22).

## Revendications

1. Structure de siège (1) comprenant :
une partie siège (2) ; et
un dossier (3) configuré pour être inclinable par rapport à la partie siège (2), dans laquelle
dans une position droite les postures de la partie siège (2) et du dossier (3) sont constantes, et
dans une position de relaxation dans laquelle le dossier (3) est incliné, la posture du dossier (3) est constante et la posture de la partie siège (2) est modifiable, dans laquelle la partie siège (2) suit un déplacement du centre de gravité de la personne assise de façon à ce que la posture de la partie siège (2) soit modifiée, dans laquelle
lorsque la personne assise impose une charge sur une partie de support de tubérosité ischiatique ou un voisinage de la partie siège (2), dans la position de relaxation, la partie siège (2) tourne autour d'une partie (2a) devant la partie de support de tubérosité ischiatique, et est bougée de sorte qu'un bord arrière (22) de la partie siège (2) devienne plus bas qu'un bord avant (21) de celle-ci, **caractérisée en ce que**
lorsque la personne assise impose une charge sur une partie proche du bord avant (21) de la partie siège (2) dans la position de relaxation, la partie siège (2) tourne autour d'une partie (2b) derrière la partie de support de tubérosité ischiatique, et est bougée de sorte que le bord avant (21) devienne plus bas que le bord arrière (23).

2. Structure de siège selon la revendication 1, comprenant en outre un repose-jambes (4) disposé de manière à pouvoir faire saillie vers l'avant depuis le dessous de la partie siège (2), dans laquelle
dans la position de relaxation, le repose-jambes (4) fait saillie vers l'avant.

3. Structure de siège selon la revendication 2, dans laquelle le repose-jambes (4) est disposé de sorte que le repose-jambes (4) soit bougé de manière à suivre un mouvement du bas des jambes de la personne assise.

4. Structure de siège selon l'une quelconque des revendications 1 à 3, comprenant en outre un repose-tête (5), dans laquelle le repose-tête (5) présente une forme faite de deux axes (5a, b) qui sont perpendiculaires l'un à l'autre dans une vue latérale et consistent en un axe long (5a) et un axe court (5b) ; le repose-tête (5) est supporté de manière rotative par une partie de montage autour du dossier (3) ; dans laquelle, dans la position droite, une extrémité (51) de celui-ci le long d'une direction de l'axe long (5a) sert de support de tête ; et dans la position de relaxation, le repose-tête (5) peut être pressé par une tête et est ainsi rotatif et une extrémité (53) de celui-ci le long d'une direction de l'axe court (5b) sert de support de tête.

5. Structure de siège selon la revendication 4, dans laquelle
la partie de montage autour du dossier (3) est un cadre (6) indépendant d'un corps d'un véhicule ou du dossier (3), et
un axe de rotation (6a) accouplé au cadre (6) indépendant du corps ou du dossier (3) supporte l'autre extrémité (52) le long de la direction de l'axe long (5a).

6. Structure de siège selon l'une quelconque des revendications 1 à 5, dans laquelle la partie siège (2) est supportée par une paire de pieds (7) faisait saillie vers l'avant depuis les côtés gauche et droit du cadre (6) de cloisonnement de siège, à une hauteur prédéterminée depuis la surface d'installation et de manière à être rotative autour d'un premier point d'appui de rotation de partie siège (2a) placé devant le centre de celle-ci dans une direction avant-arrière et de manière à être rotative autour d'un second point d'appui de rotation de partie siège (2b) disposé entre et derrière les pieds (7) de façon à ce que, lorsque la partie siège (2) tourne autour du premier point d'appui de rotation de partie siège (2a), le bord arrière (22) soit bougé de manière à devenir plus bas que le bord avant (21) et lorsque la partie siège (2) tourne autour du second point d'appui de rotation de partie siège (2b), le bord avant (21) soit bougé de manière à devenir plus bas que le bord arrière (22).
